# EUROPEAN PATENT SPECIFICATION

(11) **EP 3 232 453 B1**
(45) Date of publication and mention of the grant of the patent: **12.06.2019**
(21) Application number: 16165206.0
(22) Date of filing: 14.04.2016
(51) Int. Cl.: H01F 38/08, H01F 27/28, H01F 27/29, H01F 30/16, B23K 11/24, H01F 27/10, H01F 27/40

(54) **TRANSFORMER ARRANGEMENT**
TRANSFORMATORANORDNUNG
AGENCEMENT DE TRANSFORMATEUR

(43) Date of publication of application: 18.10.2017
(73) Proprietor: ROBERT BOSCH GMBH, 70442 Stuttgart (DE)
(72) Inventor: Brezovnik, Robert, 2360 Radlje ob Dravi (SI); Solar, Anton, 4228 Zelezniki (SI); Dolinar, Drago, 2000 Maribor (SI); Klopcic, Beno, 1231 Ljubljana Crnuce (SI); Petrun, Martin, 2364 Ribnica na Pohorju (SI)
(74) Representative: Thürer, Andreas

(56) References cited:
- EP-A1- 2 749 373
- US-B1- 6 369 680

## Description

The present invention relates to a transformer arrangement, preferably a transformer arrangement to be used in a medium frequency transformer rectifier unit for an electrical current source for resistance welding, and to a transformer rectifier unit comprising such a transformer arrangement.

### Prior Art

In case of conventional transformer arrangements, in particular welding transformer arrangements for resistance welding systems that must provide a relatively high power output, there is a need to adequately cool the electrical components, in particular components of the secondary or output circuit. Adequate cooling is also required in the region of the output rectifier due to the relatively high power loss at the rectifier diodes. For this reason, transformer arrangements are typically optimized such as to allow efficient cooling of these components.

For instance US 2010/0156583 A1 discloses a winding element for a coil winding and a transformer arrangement optimized to be cooled more easily and effectively while having a robust design.

However, such transformer arrangements often suffer from an unbalanced magnetization of the magnetic core which often can lead to strong eddy-currents reducing the efficiency of the transformer arrangement. To reduce such reductions of efficiency, other conventional transformer arrangements have been suggested, comprising a primary coil and a secondary coil alternately arranged in an adjacent manner around an iron core. Such a transformer arrangement is disclosed in US 7,978,040 B2. This arrangement aims for a reduction of differences in the magnetic flux within the iron core and by this for a reduction of a scattering of the magnetic flux.

US 6 369 680 B1 discloses a transformer arrangement including two primary winding layers and two secondary winding layers, the secondary winding layers both being arranged between the two primary winding layers. Further, EP 2 749 373 A1 discloses a transformer arrangement including two primary winding layers and a secondary winding layer.

In view of the conventional transformer arrangement it is desirable to further reduce unbalanced saturation of the magnetic core and to provide a more compact transformer arrangement with reduced weight.

### Disclosure of the invention

According to the invention, a transformer arrangement as defined in independent claim 1 and a transformer rectifier unit comprising such a transformer arrangement with the features of the independent claim are proposed. Advantageous further developments form the subject matter of the dependent claims and of the subsequent description.

The present invention provides the technical advantage that the distribution and/or arrangement of the coils and/or windings, preferably around a magnetic core, provide an optimized magnetic coupling between the primary coil and the secondary coil and/or between the primary windings and the secondary winding(s). This optimized arrangement is particularly advantageous, because local magnetic saturations of the magnetic core are reduced or even prevented. By this, disadvantageous, parasitic eddy-currents, or the so called skin effect, is reduced or even prevented, which improves the efficiency of the transformer arrangement according to the present invention as compared to conventional transformer arrangements.

A further advantage of the present invention is the suitability of the transformer arrangement for higher frequencies of the input current, such as frequencies of 1 kHz or even higher frequencies. Typically, operating conventional transformer arrangements at such high frequencies of the input currents result results in an increase of losses due to eddy-currents in the windings and the increase of switching losses in semiconductor elements. However, due to the reductions of such losses in a transformer arrangement according to the present invention, higher frequencies can be used without the risk of strongly increased losses. Therefore, the advantageous effect of higher frequencies can be exploited, i.e. providing a magnetic core having a smaller cross-section, shorter windings and, hence, a more compact and smaller configuration of the transformer arrangement can be chosen. For output voltages of ∼ 10 V and input frequency of 1 kHz ca. 15 cm² core cross-section area is necessary for cores made of grain-oriented silicon steel strip with saturation flux density ∼ 1.9 T. If higher frequencies are used, core cross-section area can be proportionally reduced (ca. 7.5 cm² at 2 kHz, ca. 5 cm² at 3 kHz, ca. 3 cm² at 5 kHz). For frequencies above 5 kHz grain-oriented silicon steel strip is not suitable anymore (losses are getting too high). Materials suitable for higher frequencies have lower saturation flux density, so the core size must be adjusted accordingly.

Further, due to the balanced and homogeneous arrangement of the coils and windings according to the present invention, magnetomotive force in the primary coil and the secondary coil compensate each other along the transformer axis and along an optional magnetic core. By this, the magnetic flux density is evenly distributed throughout the whole core and the magnetomotive forces are reduced to the effects of magnetic resetting effected by the respective part of the primary current.

The transformer arrangement according to the present invention can be advantageously used within a medium frequency transformer rectifier unit to serve as an electric current source providing a large direct current (DC). Such direct currents can be provided for instance at a magnitude of several kA and/or can be provided as pulsed direct currents having amplitudes of for example about 20 kA at an output voltage of for example about 10 V. Such a preferred configuration might be particularly advantageous for the use in resistance welding guns according to the standard ISO 22829 or similar standards.

The coil comprises windings, which are wound around a coil axis or the transformer axis. For instance a winding can represent one loop of the coil, which extends around the coil axis, for example by 360°. The coil can comprise a plurality of windings attached to each other or made of an elongated electric conductor wound up such as to form a plurality of loops or windings. However, a winding does not necessarily enclose an inner angle of 360° such as to represent a full loop but can also represent an open loop extending for example over an angle smaller than 360°, such as for example 180° or 275°. For instance a winding can have a C-like cross-sectional shape. If the extension in length direction, i.e. in the direction parallel to the transformer axis, is longer than the cross-section extension, then the winding may substantially have a tubular shape, which may be cut open for instance in a direction parallel to the length direction.

Each coil comprises windings arranged in layers. A layer may comprise several windings arranged in an adjacent manner along a length direction and is configured such that the windings are wound around the transformer axis, preferably in a concentric manner. A layer may also comprise several windings adjacent in the length direction and partially stacked over each other, such as to form an even tighter arrangement of windings. A layer of the primary coil is denoted as a primary winding layer, wherein a layer of the secondary coil is denoted as a secondary winding layer.

Each primary winding layer and each secondary winding layer surround, preferably concentrically, the transformer axis. Concentrically means that the coil or the windings are wound around a common axis, wherein the axis can but is not necessarily required to extend along a straight line. Concentrically wound windings further can be provided with the same diameter and/or the same cross-sectional shape and/or with varying diameters and/or varying cross-sectional shapes. The coils or layers can be provided with arbitrary cross-sectional shapes taken perpendicular to the transformer axis, such as round, elliptical, triangular, polygonal and/or rectangular shapes.

The primary coil comprising the primary windings is preferably adapted to be supplied with the electric current input to be transformed by the transformer arrangement. The secondary coil comprising at least one secondary winding is preferably adapted to supply the output electric current, which relates to the transformed input current transformed by the transformer arrangement.

The transformer arrangement is adapted to be arranged at least partially along a transformer axis. The primary coil and the secondary coil are preferably wound so that the respective central axes of the coils are parallel to or coincide with the transformer axis. Preferably, the transformer arrangement is provided with a magnetic core, which is arranged along the transformer axis. Optionally, such a magnetic core has a cross-sectional size and shape such as to fill the cross-sectional area of the coil having the smallest diameter of the coils comprised by the transformer arrangement, wherein the coils are preferably electrically isolated against the magnetic core. The magnetic core is, however, not restricted to the length or longitudinal dimension of the coils along the transformer axis, but can for instance extend outside the end surfaces of the coils and be wound around the coils such as to represent one or more closed loops of the magnetic core. Such an arrangement of the magnetic core might be advantageous for the magnetic flux inside the magnetic core.

According to a preferred embodiment, the transformer arrangement provides a primary coil having primary windings, which are tightly wound around the transformer axis and/or around a magnetic core. Tightly wound means that the space or gap between two adjacent windings is smaller, preferably much smaller, than the width of the primary windings. The separation along the transformer axis between two adjacent primary windings of the plurality of primary windings may be smaller than a width of each of the primary windings along the transformer axis. For instance, a ratio of the separation between two adjacent primary windings to the width of a primary winding of the plurality of primary windings is at most 0.5, preferably at most 0.25, more preferably at most 0.1, most preferably at most 0.05. The gap or space between the windings can for instance be void or at least partially be filled with electrically isolating material to isolate the windings against each other and against the magnetic core.

In another preferred embodiment, the transformer arrangement according to the present invention can provide a primary coil having flat windings, i.e. windings having a larger width than their thickness. The width is the extension of the primary windings parallel to the transformer axis wherein the thickness of the primary windings is their extension perpendicular, in particular radially, to the transformer axis. For instance, a ratio of the thickness of the primary windings perpendicular to the transformer axis to the width of the primary windings can be at most 0.8 and/or at least 0.01, preferably at most 0.5 and/or at least 0.05, more preferably at most 0.25 and/or at least 0.1, most preferably at most 0.2 and/or at least 0.15.

For instance, the primary windings can be made at least partially of flat wire. The flat wire preferably comprises electrically conductive materials, such as copper. The flat wire can further comprise an enamel wire, i.e. the flat wire can be provided with an electrically isolating enamel on its outside.

The transformer comprises a primary coil having three primary winding layers, each of them comprising a plurality of windings being substantially wound around the transformer axis in a respective primary winding layer distance range. The primary winding layers are each arranged in a different primary winding layer distance range from the transformer axis and do not overlap each other in the cross-section taken perpendicular to the transformer axis. These primary winding layer distance ranges do not overlap the secondary winding layer distance ranges. The different primary winding layers are wound around the transformer axis such that the cross-sections of the different primary winding layers taken perpendicular to the transformer axis have different sizes and do not overlapping each other. In other words, a first primary winding layer may be arranged closer to the transformer axis and being surrounded by a second primary winding layer wound around the transformer axis in a larger distance. Preferably, the different primary winding layers have the same cross-sectional shape taken perpendicular to the transformer axis but deviate in their cross-sectional sizes or dimensions.

The transformer comprises two secondary winding layers in different secondary winding layer distance ranges, so that the at least two secondary winding layers do not overlap each other in the cross-section. The two secondary winding layers do not overlap with the primary winding layers in the cross-section.

The primary and secondary winding layers do not overlap each other in the cross-section. In other words, the primary winding layers and the secondary winding layers are separated from each other in the cross-section and in particular the windings of the primary winding layers do not interdigitate the windings of the secondary winding layers.

In another preferred embodiment at least one of the primary winding layers is arranged on the inner side having the smallest cross-sectional dimensions as compared to other primary winding layers and the secondary winding layers. More preferably another primary winding layer is arranged on the outer side having the largest cross-sectional dimensions as compared to other primary winding layers and the secondary winding layers. In other words, the inner side and the outer side in the cross-section of the configuration of the primary winding layers and the secondary winding layers are each defined by a primary winding layer.

Although not overlapping in the cross-section, the primary winding layers and the secondary winding layers are arranged such as to overlap in the direction along the transformer axis. In other words, the primary winding layers and the secondary winding layers preferably extend together at least partially in a length section along the transformer axis, preferably in a concentric manner.

In another preferred embodiment the at least two secondary winding layers are configured, such that the two secondary winding layers are electrically connected in series and thus allow a center tap connection for providing DC output of the transformer arrangement.

Preferably, the at least one secondary winding layer is configured such as to be electrically connectable at the at least one end face of the secondary winding layer along the transformer axis.

The secondary coil is configured such as to comprise flow channels for a cooling fluid. The cooling fluid may comprise a gaseous and/or a liquid medium. For instance, the secondary windings may be configured to comprise a hollow core allowing the flow of a cooling fluid through the hollow core. With this configuration a particularly efficient cooling of the secondary coil and the transformer arrangement as such can be achieved. The use of water as a cooling fluid may be advantageous.

The transformer arrangement may further comprise at least one magnetic core, which is arranged at least partially along the transformer axis, such that the primary coil and the secondary coil are at least partially wound around the at least one magnetic core. The at least one magnetic core may comprise ferromagnetic materials and may for instance be arranged as a band core. For instance the core may be at least partially made of grain-oriented silicon iron. For operating the transformer arrangement at high frequencies (above the range 2 to 5 kHz) the core may be at least partially made of monocrystalline materials, sintered powder-materials and/or ferrites.

Further advantages and embodiments of the invention become apparent from the description and the enclosed drawings.

It has to be understood that the preceding and following features are not only usable in the explicitly mentioned combinations but also in other combinations or also when used alone without exceeding the scope of the present invention.

The invention is schematically illustrated in the figures by means of embodiments and is discussed in detail in the following with reference to the drawings.

### Description of the figures

Figure 1 shows a perspective view of a schematic illustration of a transformer arrangement according to a preferred embodiment of the invention.
Figure 2 shows a longitudinal section of a transformer arrangement according to the preferred embodiment of the invention shown in Figure 1.
Figure 3 shows an exploded view of a schematic illustration of a secondary winding according to a preferred embodiment of the present invention.
Figure 4 shows a schematic illustration of a transformer rectifier unit according to a preferred embodiment of the present invention.
Figure 5 shows a circuit diagram of a transformer rectifier unit according to a preferred embodiment of the present invention.
Figures 6A and 6B show illustrations of a comparison of 2D-FEM simulation results for a transformer arrangement according to a preferred embodiment of the present invention compared to a conventional transformer arrangement.

### Detailed description of the drawings

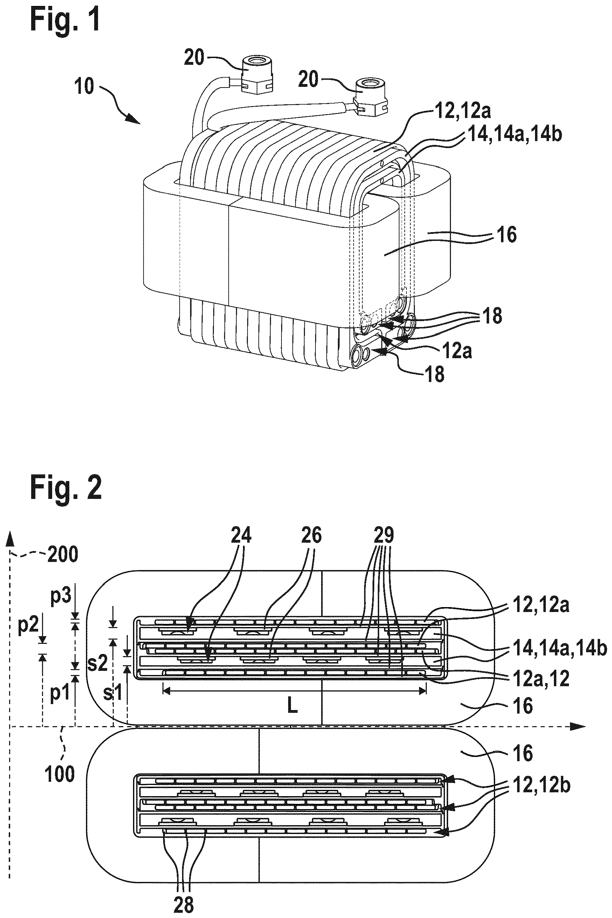

Referring to figures 1 and 2, a transformer arrangement 10 according to a preferred embodiment of the invention is described.

The transformer arrangement 10 comprises a primary coil 12, which in turn comprises in the illustrated embodiment three primary winding layers 12b. Each primary winding layer 12b comprise a plurality of primary windings 12a wound around a transformer axis 100 in a respective primary winding layer distance range p1, p2, p3.

The transformer arrangement 10 further comprises a secondary coil 14, which in turn comprises in the illustrated embodiment two secondary winding layers 14b. Each secondary winding layer 14b comprises one secondary winding 14a wound around the transformer axis 100 in a respective secondary winding layer distance range s1, s2.

As one can see best in Figure 2, the three primary winding layer distance ranges p1, p2, p3 and the two secondary winding layer distance range s1, s2 each extend perpendicular to the transformer axis 100 and are not overlapping each other. Furthermore, the three primary winding layers 12b and the two secondary winding layers 14b are arranged to overlap in a length section L along the transformer axis 100.

Both the primary coil 12 and the secondary coil 14 are wound in a concentric manner around a magnetic core 16, which comprises two closed core rings extending straight along the transformer axis 100 (shown in figure 2) and closing round the sides of the primary coil 12 and the secondary coil 14.

As illustrated, the cross-sectional shape of the primary winding layers 12b and the secondary winding layers 14b taken perpendicular to the transformer axis 100 resembles a rectangular shape with flattened corners being arranged in a concentric manner one around each other, wherein the cross-sectional centers of the primary winding layers 12b and the secondary winding layers 14b are located on the transformer axis 100. The primary coil 12 and the secondary coil 14 are adjusted to have substantially the same length and to extend substantially along the same length section along the transformer axis 100. Along this length section also the magnetic core 16 extends substantially parallel to the transformer axis 100 and bends around the end faces of the primary coil 12 and the secondary coil 14 to form a closed ring structure.

Contours covered by the magnetic core 16 are partially illustrated as dotted lines in figure 1. At least one of the end faces the secondary coil is provided with contact areas 18 allowing to electrically contact the secondary coil 14. As apparent from figure 1, each of the secondary windings 14a is provided with at least two contact areas each independent of the other secondary winding 14a. Having two distinct secondary windings 14a allows a center tap connection of the secondary coil 14 for providing a DC (direct current) output of the transformer arrangement, which might be advantageous for operating the transformer arrangement as a power supply unit for resistance welding.

In addition, at least one end face of each secondary winding 14a is provided with cooling fluid connections 22 to supply cooling fluid to cooling fluid channels 24 being integrated in the secondary windings 14a. The primary coil can be electrically connected via connection units 20, which might extend from the primary coil 12.

As illustrated in figure 1 the secondary coil 14 comprises two secondary windings 14a, each arranged in a separated secondary layer distance range s1, s2 from the transformer axis 100, i.e. in a different distance to the center of the secondary coil 14, without overlapping each other. In the same manner, the secondary windings 14a also do not overlap with any primary winding layer 12b of the primary coil 12 along the cross-sectional direction but are separated from each other.

Figure 2 illustrates the transformer arrangement 10 in a longitudinal sectional view, when cut through the transformer arrangement 10 along the transformer axis 100. As apparent from figure 2, the transformer arrangement 10 comprises the primary coil 12 having the three primary winding layers 12b of primary windings 12a, wherein the primary winding layers 12b do not overlap with the two secondary winding layers 14b in the cross-sectional direction 200 but are each arranged in a separate respective distance range. According to the illustrated embodiments, the three primary winding layers 12b are wound around the transformer axis in different distance ranges p1, p2, p3 and electrically connected to form one singly primary coil 12. One primary winding 12a forming an electrical connection between two primary winding layers can be seen in figure 1 between the contact areas 18.

However, the single primary windings 12a and secondary windings 14a are electrically isolated against each other to prevent current flows deviating from the coil current flowing through the windings. As depicted, the primary windings 12a are made of flat wire and are isolated by electrical isolation means 28 and are wound tightly adjacent to each other around the transformer axis 100 such that there exists substantially no gap between two different windings 12a besides the gaps required for electrical isolation means 28.

The secondary windings 14a each extend substantially over the whole length section along the transformer axis 100 covered by the inner primary winding layer. As becomes apparent in figure 2, the cooling fluid channels 24 are integrated in each of the secondary windings 14a, respectively, and are each covered by a coverage 26. The coverage 26 preferably is made of an electrically and/or thermally conductive material, such as a metal, to contribute to the conduction of electrical current in the respective secondary winding 14a and/or the dissipation of waste heat.

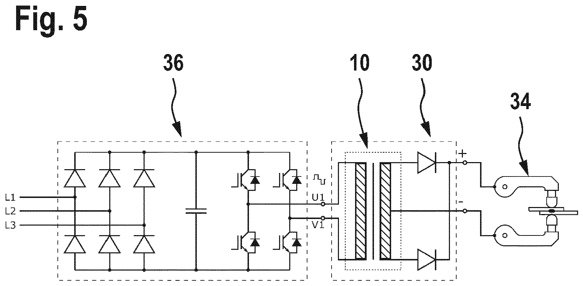

The secondary windings 14a are separated from each other allowing a center tap connection of the secondary coil 14 and connecting the secondary coil 14 in series with rectifier diodes (shown in figure 5). The secondary windings 14a and the magnetic core 16 are isolated by electrical isolation means 29.

The configuration according to the present invention, such as according to the embodiment depicted in figures 1 and 2, has the technical benefit of an improved magnetic coupling between the windings of the primary coil 12 and the secondary coil 14 and thus prevents magnetic saturation of the magnetic core 16 and detrimental eddy-currents within the windings (skin-effect).

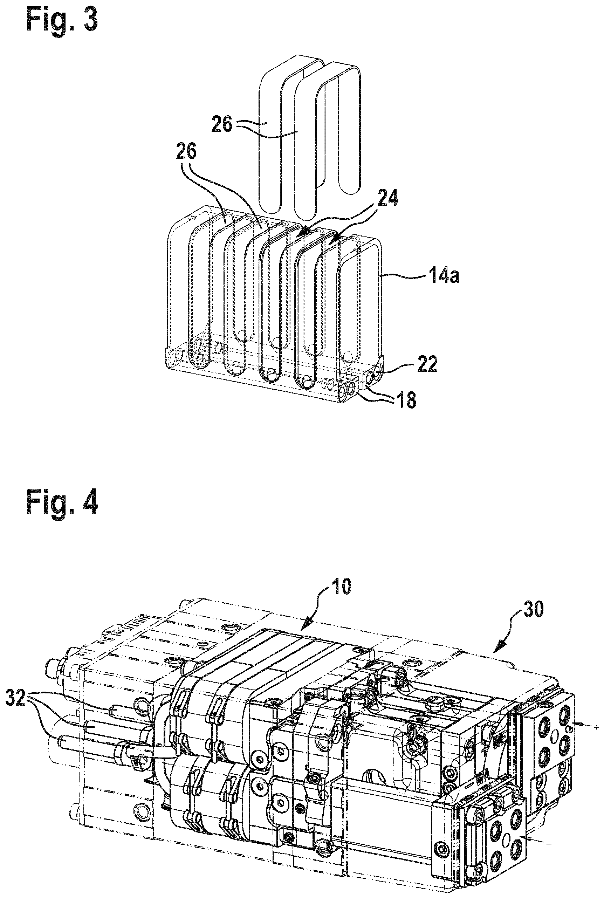

Figure 3 depicts an exploded view of a schematic illustration of a secondary winding 14a according to the preferred embodiment of the present invention illustrated in figure 1 and 2. Each secondary winding 14a may be provided with a plurality of coverages 26 for covering the cooling fluid channels 24 in the respective secondary winding 14a. The coverages 26 may be configured to be removable from the respective secondary winding 14a for facilitating maintenance and repair of the secondary winding 14a. They also may be soldered or welded to the secondary winding 14a. The size and the shape of the coverages 26 are matched to the cross-sectional shape and size of the respective secondary winding 14a to provide sufficient thermal and electrical contact between the secondary winding 14a and the coverage 26 such as to allow an efficient contribution of the coverages 26 to the conduction of electrical current and heat through the secondary winding 14a.

Figure 4 shows a schematic illustration of a transformer rectifier unit 30 according to a preferred embodiment of the present invention, a transformer arrangement 10 according to a preferred embodiment of the invention being integrated in the transformer rectifier unit 30. The compact structure of the transformer arrangement 10 allows placing the transformer arrangement 10 within a compact transformer rectifier unit 30 and the transformer rectifier unit 30 to be integrated in a resistance welding gun 34 (shown in figure 5). Electrical power supply connections 32 provide electrical power to the primary coil 12, wherein the transformed current output is provided on the contact area 18 of the secondary coil 14 for supplying the transformed current and voltage to the rectifier diodes (shown in figure 5).

Figure 5 illustrates a circuit diagram of a transformer rectifier unit 30 according to a preferred embodiment of the present invention. The transformer rectifier unit 30 comprising the transformer arrangement 10 is integrated in a supply system for providing electrical current to resistance welding gun 34. The transformer rectifier unit 30 itself is supplied by an electrical power supply unit 36 being supplied with alternating current. In particular, the shown transformer rectifier unit 30 having an integrated transformer arrangement 10 is configured to be integrated in a housing according to ISO 22829.

The electrical power supply unit 36 comprises a six-pulse-three-phase-rectifier converting the voltage of the power grid into direct current (DC). The electrical power supply unit 36 further comprises a DC link capacitor for voltage smoothing and an H-bridge-converter together with a corresponding control unit.

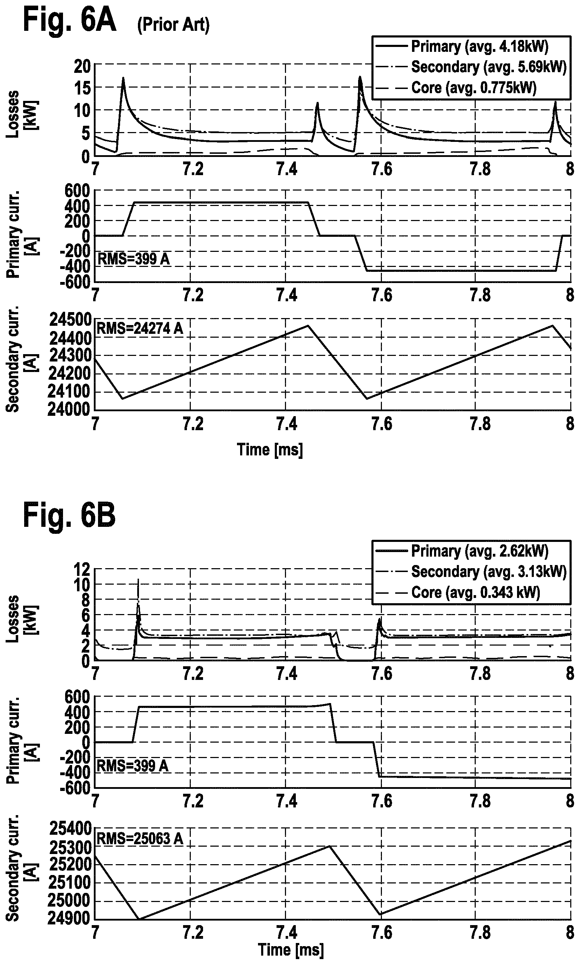

Figures 6A and 6B illustrate results of 2D-FEM simulations (FEM denotes the finite-elements-method) comparing a conventional transformer arrangement (figure 6A) as disclosed in DE 10 2007 001233 and WO 2008/083839 with a transformer arrangement 10 according to an embodiment of the present invention (figure 6B).

Figures 6A and 6B graphically illustrate the different losses in the primary and secondary coils and in the magnetic core for a given primary current history (RMS ca. 400 A), resulting specific in a secondary current history (RMS ca. 25kA).

A high temporal gradient in the electrical current dl/dt typically causes high eddy-currents leading to significant losses in prior art. Thereby the conventional transformer arrangement having a conventional configuration of windings (figure 6A) leads to a strongly inhomogeneous distribution of magnetic flux due to a high magnetomotive force along the sides of the magnetic core, which results in a high degree of disadvantageous magnetic saturation within the core.

In the case of a transformer arrangement according to the present invention the magnetomotive forces of the primary coil and the secondary coil compensate each other along the whole length of the sides of the magnetic core. Therefore, only the resetting part of the primary current causes a magnetomotive force and a magnetic flux density within the magnetic core, which leads to a homogeneous distribution of the magnetic flux density within the magnetic core.

Due to the primary winding layers 12b and secondary winding layers 14b being arranged according to the claimed invention, also the current density is evenly and homogeneously distributed. This effect is further increased by providing especially elongated and thin primary windings 12a and tubular secondary windings 14a. The arrangement according to the present invention has the beneficial effect that peak currents due to eddy-current losses are less pronounced and occur over a reduced time span (figure 6B) as compared to conventional transformer arrangements (figure 6A). Skin-effects and proximity-effects are thus less pronounced when using a transformer arrangement according to the present invention, which makes a transformer according to the present invention particularly suitable for the use at high frequencies, such as frequencies of 1 kHz or even higher frequencies.

### Lit of reference numerals

- 10: transformer arrangement
- 12: primary coil
- 12a: primary winding
- 12b: primary winding layer
- 14: secondary coil
- 14a: secondary winding
- 14b: secondary winding layer
- 16: magnetic core
- 18: contact area (of secondary coil)
- 20: connection elements
- 22: cooling fluid connections
- 24: cooling fluid channels
- 26: coverage
- 28: electrical isolation means
- 29: electrical isolation means
- 30: transformer rectifier unit
- 32: electrical power supply connections
- 34: resistance welding gun
- 36: electrical power supply unit

- 100: transformer axis
- 200: cross-sectional direction

## Claims

1. Transformer arrangement (10) having a transformer axis (100), comprising:
a primary coil (12) comprising three primary winding layers (12b), each primary winding layer (12b) comprising a plurality of primary windings (12a) wound around the transformer axis (100) in a respective primary winding layer distance range from the transformer axis (100),
a secondary coil (14) comprising two secondary winding layers (14b), each secondary winding layer (14b) comprising at least one secondary winding (14a) wound around the transformer axis (100) in a respective secondary winding layer distance range from the transformer axis (100),
wherein the three primary winding layer distance ranges and the two secondary winding layer distance ranges each extend perpendicular to the transformer axis (100) and are not overlapping each other, wherein the three primary winding layers (12b) and the two secondary winding layers (14b) are arranged to overlap in a length section along the transformer axis (100),
wherein each of the three primary winding layers (12b) has a different primary winding layer distance range, and wherein the three different primary winding layer distance ranges each extend perpendicular to the transformer axis (100) and are not overlapping each other and are not overlapping the two secondary winding layer distance ranges,
wherein each of the two secondary winding layers (14b) has a different secondary winding layer distance range, wherein the two different secondary winding layer distance ranges each extend perpendicular to the transformer axis (100) and are not overlapping each other and are not overlapping the three primary winding layer distance ranges,
wherein each of the two secondary winding layers (14b) extends substantially over the whole length section along the transformer axis (100) and is surrounded by two primary winding layers (12b), the two secondary winding layers (14b) being distinct with one of the primary winding layers in-between, and
wherein the secondary coil (14) comprises flow channels (24) for a cooling fluid, the flow channels (24) being integrated in the secondary windings (14a).

2. Transformer arrangement (10) according to claim 1, wherein the three primary winding layers (12b) and the two secondary winding layers (14b) surround, concentrically, the transformer axis (100).

3. Transformer arrangement (10) according to any one of the preceding claims, wherein the at least one secondary winding (14a) has a longitudinal axis parallel to the transformer axis and/or has a cross-sectional C shape taken perpendicular to the transformer axis and/or has a tubular shape along the transformer axis (100) being cut open substantially along one axis parallel to the transformer axis (100).

4. Transformer arrangement (10) according to any one of the preceding claims, wherein along the transformer axis (100) a separation between two adjacent primary windings (12a) of a primary winding layer (12b) is smaller than a width of each of the primary windings (12a) along the transformer axis (100).

5. Transformer arrangement (10) according to any one of the preceding claims, wherein a ratio of the separation between two adjacent primary windings (12a) to the width of a primary winding (12a) is at most 0.5, preferably at most 0.25, more preferably at most 0.1, most preferably at most 0.05.

6. Transformer arrangement (10) according to any one of the preceding claims, wherein a ratio of a thickness of a primary winding (12a) perpendicular to the transformer axis (100) to the width of the primary winding (14) is at most 0.8 and at least 0.01, preferably at most 0.5 and at least 0.05, more preferably at most 0.25 and at least 0.1, most preferably at most 0.2 and at least 0.15.

7. Transformer arrangement (10) according to any one of the preceding claims, wherein the three primary windings (12a) are at least partially made of flat wire.

8. Transformer arrangement (10) according to any one of the preceding claims, wherein the primary winding layers (12b) and the secondary winding layers (14b) are substantially arranged, geometrically, in parallel in a length section along the direction of the transformer axis (100).

9. Transformer arrangement (10) according to any one of the preceding claims, wherein the two secondary winding layers (14b) of the secondary coil (14) are electrically connected in series and allow a center tap connection.

10. Transformer arrangement (10) according to any one of the preceding claims, further comprising a magnetic core (16) arranged at least partially along the transformer axis (100).

11. Transformer rectifier unit (30) comprising a transformer arrangement (10) according to any one of the preceding claims.

## Patentansprüche

1. Transformatoranordnung (10) mit einer Transformatorachse (100), Folgendes umfassend:
eine Primärspule (12), umfassend drei Primärwicklungsschichten (12b), wobei jede Primärwicklungsschicht (12b) mehrere Primärwicklungen (12a) umfasst, die um die Transformatorachse (100) herum in einem jeweiligen Primärwicklungsschicht-Entfernungsbereich von der Transformatorachse (100) gewickelt sind,
eine Sekundärspule (14), umfassend zwei Sekundärwicklungsschichten (14b), wobei jede Sekundärwicklungsschicht (14b) mindestens eine Sekundärwicklung (14a) umfasst, die um die Transformatorachse (100) herum in einem jeweiligen Sekundärwicklungsschicht-Entfernungsbereich von der Transformatorachse (100) gewickelt sind,
wobei die drei Primärwicklungsschicht-Entfernungsbereiche und die beiden Sekundärwicklungsschicht-Entfernungsbereiche sich jeweils senkrecht zu der Transformatorachse (100) erstrecken und sich einander nicht überlappen, wobei die drei Primärwicklungsschichten (12b) und die beiden Sekundärwicklungsschichten (14b) angeordnet sind, sich in einem Längenabschnitt entlang der Transformatorachse (100) zu überlappen,
wobei jede der drei Primärwicklungsschichten (12b) einen verschiedenen Primärwicklungsschicht-Entfernungsbereich aufweist und wobei sich die drei verschiedenen Primärwicklungsschicht-Entfernungsbereiche jeweils senkrecht zu der Transformatorachse (100) erstrecken und sich einander nicht überlappen und die beiden Sekundärwicklungsschicht-Entfernungsbereiche nicht überlappen,
wobei jede der beiden Sekundärwicklungsschichten (14b) einen verschiedenen Sekundärwicklungsschicht-Entfernungsbereich aufweist, wobei sich die beiden verschiedenen Sekundärwicklungsschicht-Entfernungsbereiche jeweils senkrecht zu der Transformatorachse (100) erstrecken und sich einander nicht überlappen und die drei Primärwicklungsschicht-Entfernungsbereiche nicht überlappen,
wobei sich jede der beiden Sekundärwicklungsschichten (14b) im Wesentlichen über den ganzen Längenabschnitt entlang der Transformatorachse (100) erstreckt und von zwei Primärwicklungsschichten (12b) umgeben ist, wobei die beiden Sekundärwicklungsschichten (14b) durch eine der Primärwicklungsschichten dazwischen getrennt sind, und
wobei die Sekundärspule (14) Strömungskanäle (24) für ein Kühlfluid umfasst, wobei die Strömungskanäle (24) in die Sekundärwicklungen (14a) integriert sind.

2. Transformatoranordnung (10) nach Anspruch 1, wobei die drei Primärwicklungsschichten (12b) und die beiden Sekundärwicklungsschichten (14b) die Transformatorachse (100) konzentrisch umgeben.

3. Transformatoranordnung (10) nach einem der vorhergehenden Ansprüche, wobei die mindestens eine Sekundärwicklung (14a) eine Längsachse parallel zu der Transformatorachse aufweist und/oder einen C-förmigen Querschnitt senkrecht zu der Transformatorachse aufweist und/oder entlang der Transformatorachse (100) eine röhrenförmige Gestalt aufweist, die im Wesentlichen entlang einer Achse parallel zu der Transformatorachse (100) aufgeschnitten ist.

4. Transformatoranordnung (10) nach einem der vorhergehenden Ansprüche, wobei entlang der Transformatorachse (100) eine Trennung zwischen zwei benachbarten Primärwicklungen (12a) einer Primärwicklungsschicht (12b) kleiner ist als eine Breite jeder der Primärwicklungen (12a) entlang der Transformatorachse (100).

5. Transformatoranordnung (10) nach einem der vorhergehenden Ansprüche, wobei ein Verhältnis der Trennung zwischen zwei benachbarten Primärwicklungen (12a) zu der Breite einer Primärwicklung (12a) höchstens 0,5, vorzugsweise höchstens 0,25, besonders bevorzugt höchstens 0,1, ganz besonders bevorzugt höchstens 0,05 beträgt.

6. Transformatoranordnung (10) nach einem der vorhergehenden Ansprüche, wobei ein Verhältnis einer Dicke einer Primärwicklung (12a) senkrecht zu der Transformatorachse (100) zu der Breite der Primärwicklung (14) höchstens 0,8 und mindestens 0,01, vorzugsweise höchstens 0,5 und mindestens 0,05, besonders bevorzugt höchstens 0,25 und mindestens 0,1, ganz besonders bevorzugt höchstens 0,2 und mindestens 0,15 beträgt.

7. Transformatoranordnung (10) nach einem der vorhergehenden Ansprüche, wobei die drei Primärwicklungen (12a) mindestens teilweise aus Flachdraht angefertigt sind.

8. Transformatoranordnung (10) nach einem der vorhergehenden Ansprüche, wobei die Primärwicklungsschichten (12b) und die Sekundärwicklungsschichten (14b) im Wesentlichen geometrisch parallel in einem Längenabschnitt entlang der Richtung der Transformatorachse (100) angeordnet sind.

9. Transformatoranordnung (10) nach einem der vorhergehenden Ansprüche, wobei die beiden Sekundärwicklungsschichten (14b) der Sekundärspule (14) elektrisch in Reihe geschaltet sind und eine Mittenabgriffverbindung ermöglichen.

10. Transformatoranordnung (10) nach einem der vorhergehenden Ansprüche, weiterhin umfassend einen Magnetkern (16), der mindestens teilweise entlang der Transformatorachse (100) angeordnet ist.

11. Transformatorgleichrichtereinheit (30), umfassend eine Transformatoranordnung (10) nach einem der vorhergehenden Ansprüche.

## Revendications

1. Agencement de transformateur (10) comportant un axe de transformateur (100), comprenant :
une bobine primaire (12) comprenant trois couches d'enroulement primaire (12b), chaque couche d'enroulement primaire (12b) comprenant une pluralité d'enroulements primaires (12a) enroulés autour de l'axe de transformateur (100) dans une plage de distances de couche d'enroulement primaire respective par rapport à l'axe de transformateur (100),
une bobine secondaire (14) comprenant deux couches d'enroulement secondaire (14b), chaque couche d'enroulement secondaire (14b) comprenant au moins un enroulement secondaire (14a) enroulé autour de l'axe de transformateur (100) dans une plage de distances de couche d'enroulement secondaire respective par rapport à l'axe de transformateur (100),
dans lequel les trois plages de distances de couche d'enroulement primaire et les deux plages de distances de couche d'enroulement secondaire s'étendent chacune perpendiculairement à l'axe de transformateur (100) et ne se chevauchent pas les unes les autres, tandis que les trois couches d'enroulement primaire (12b) et les deux couches d'enroulement secondaire (14b) sont agencées pour se chevaucher dans une section de longueur longeant l'axe de transformateur (100),
dans lequel chacune des trois couches d'enroulement primaire (12b) a une plage de distances de couche d'enroulement primaire différente, et dans lequel les trois plages de distances de couche d'enroulement primaire différentes s'étendent chacune perpendiculairement à l'axe de transformateur (100) et ne se chevauchent pas les unes les autres et ne chevauchent pas les deux plages de distances de couche d'enroulement secondaire,
dans lequel chacune des deux couches d'enroulement secondaire (14b) a une plage de distances de couche d'enroulement secondaire différente, les deux plages de distances de couche d'enroulement secondaire différentes s'étendant chacune perpendiculairement à l'axe de transformateur (100) et ne se chevauchant pas les unes les autres et ne chevauchant pas les trois plages de distances de couche d'enroulement primaire,
dans lequel chacune des deux couches d'enroulement secondaire (14b) s'étend sensiblement sur la section de longueur complète longeant l'axe de transformateur (100) et est entourée par deux couches d'enroulement primaire (12b), les deux couches d'enroulement secondaire (14b) étant distinguées par la présence d'une des couches d'enroulement primaire entre elles, et
dans lequel la bobine secondaire (14) comprend des canaux de circulation (24) destinés à un liquide de refroidissement, les canaux de circulation (24) étant intégrés aux enroulements secondaires (14a).

2. Agencement de transformateur (10) selon la revendication 1, dans lequel les trois couches d'enroulement primaire (12b) et les deux couches d'enroulement secondaire (14b) entourent, de façon concentrique, l'axe de transformateur (100).

3. Agencement de transformateur (10) selon l'une quelconque des revendications précédentes, dans lequel ledit au moins un enroulement secondaire (14a) possède un axe longitudinal parallèle à l'axe de transformateur et/ou a une coupe transversale en forme de C prise perpendiculairement à l'axe de transformateur et/ou a une forme tubulaire le long de l'axe de transformateur (100) découpé sensiblement le long d'un axe parallèle à l'axe de transformateur (100).

4. Agencement de transformateur (10) selon l'une quelconque des revendications précédentes, dans lequel, le long de l'axe de transformateur (100), une séparation entre deux enroulements primaires adjacents (12a) d'une couche d'enroulement primaire (12b) est inférieure à une largeur de chacun des enroulements primaires (12a) présents le long de l'axe de transformateur (100).

5. Agencement de transformateur (10) selon l'une quelconque des revendications précédentes, dans lequel un rapport de la séparation entre deux enroulements primaires adjacents (12a) à la largeur d'un enroulement primaire (12a) est au plus égal à 0,5, de préférence au plus égal à 0,25, plus préférablement au plus égal à 0,1, de manière préférée entre toutes au plus égal à 0,05.

6. Agencement de transformateur (10) selon l'une quelconque des revendications précédentes, dans lequel un rapport de l'épaisseur d'un enroulement primaire (12a) perpendiculaire à l'axe de transformateur (100) à la largeur de l'enroulement primaire (14) est au plus égal à 0,8 et au moins égal à 0,01, de préférence au plus égal à 0,5 et au moins égal à 0,05, plus préférablement au plus égal à 0,25 et au moins égal à 0,1, de manière préférée entre toutes au plus égal à 0,2 et au moins égal à 0,15.

7. Agencement de transformateur (10) selon l'une quelconque des revendications précédentes, dans lequel les trois enroulements primaires (12a) sont fabriqués au moins partiellement avec du fil plat.

8. Agencement de transformateur (10) selon l'une quelconque des revendications précédentes, dans lequel les couches d'enroulement primaire (12b) et les couches d'enroulement secondaire (14b) sont sensiblement agencées, du point de vue géométrique, de manière parallèle dans une section de longueur longeant la direction de l'axe de transformateur (100).

9. Agencement de transformateur (10) selon l'une quelconque des revendications précédentes, dans lequel les deux couches d'enroulement secondaire (14b) de la bobine secondaire (14) sont reliées en série et offrent une connexion de prise centrale.

10. Agencement de transformateur (10) selon l'une quelconque des revendications précédentes, comprenant également un noyau magnétique (16) agencé au moins partiellement le long de l'axe de transformateur (100).

11. Unité de redressement de transformateur (30) comprenant un agencement de transformateur (10) selon l'une quelconque des revendications précédentes.
